# EUROPEAN PATENT APPLICATION

(11) **EP 4 246 079 A1**
(43) Date of publication of application: **20.09.2023**
(21) Application number: 22161902.6
(22) Date of filing: 14.03.2022
(51) Int. Cl.: F28D 20/00, F28D 17/00, F28F 9/02

(54) **ENERGY STORAGE DEVICE AND OPERATING METHOD**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Huck, Daniel, 22309 Hamburg (DE)
(74) Representative: SGRE-Association

(57) **Abstract**

An energy storage device (2) is provided. The energy storage device (2) comprises a storage chamber (8), wherein the storage chamber (8) comprises a port (4, 6) configured to pass a heat transfer medium via piping (16) connectable to the port, a heat storage material (10) disposed in the storage chamber (8) and configured to exchange thermal energy with the heat transfer medium when the heat transfer medium flows through the energy storage device (2) via the port (4, 6), and a flow control arrangement (20) arranged in a transition area (18) between the port (4, 6) and the heat storage material (10). The flow control arrangement (20) is controllable to adjust a flow of the heat transfer medium through a boundary region (25) between the transition area (18, 19) and the heat storage material (10).

## Description

### FIELD OF THE INVENTION

The present invention relates to an energy storage device comprising a storage chamber with heat storage material. It further relates to a method of operating such energy storage device.

### BACKGROUND

Energy storage devices can be used for example to store thermal energy obtained from a conversion of electrical energy or other energy sources, which can later be converted back to electrical energy as required.

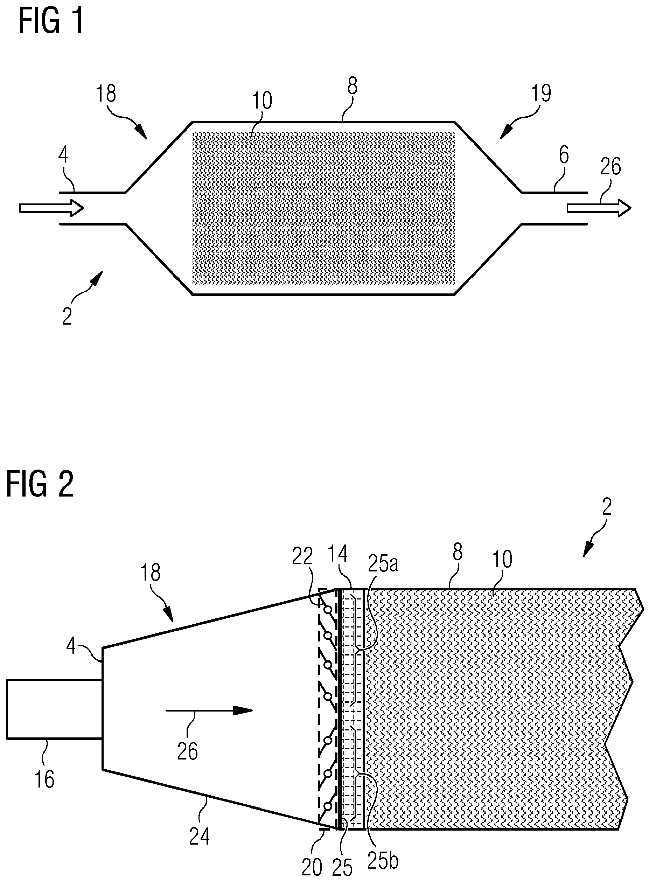

Fig. 1 schematically illustrates an exemplary configuration of a respective energy storage device 2. The energy storage device comprises a storage chamber 8, wherein the storage chamber 8 comprises a first port 4, and a second port 6 arranged at an opposing end of the energy storage device 2. Each port 4, 6 is configured to pass a heat transfer medium into the energy storage device 2. A heat storage material 10 is disposed in the storage chamber 8 and configured to exchange thermal energy with the heat transfer medium when the heat transfer medium flows through the energy storage device 2 via the port 4, 6. A first and second transition area 18, 19 is provided between the port 4, 6 and the heat storage material 10. The energy storage device 2 may in particular be configured as described in the document EP3102796A1.

A temperature gradient may exist in the heat storage material. In the area of the temperature gradient in the storage material, a convection flow may occur due to rising hotter medium and sinking colder medium. This convection flow may lead to an inclination of the temperature profile in the storage device, in particular of an isothermal surface at the position of the largest thermal gradient or of an isothermal surface/front with a specific temperature such as the charging temperature of the storage device, resulting in a reduced efficiency of the energy storage device. Due to the inclined temperature profile, a charging or discharging process may end prematurely.

### SUMMARY

Accordingly, there is a need to mitigate at least some of the drawbacks mentioned above and to provide an improved energy storage device. There is further a need to use such energy device more efficiently.

This need is met by the features of the independent claims. The dependent claims describe embodiments of the invention.

According to an embodiment, an energy storage device is provided. The energy storage device comprises a storage chamber, wherein the storage chamber comprises a port configured to pass a heat transfer medium (also herein called 'medium') via piping connectable to the port, a heat storage material disposed in the storage chamber and configured to exchange thermal energy with the heat transfer medium when the heat transfer medium flows through the energy storage device via the port, and a flow control arrangement arranged in a transition area between the port and the heat storage material, wherein the flow control arrangement is controllable to adjust a flow of the heat transfer medium through a boundary region between the transition area and the heat storage material.

By means of such flow control arrangement, the flow distribution of the heat transfer medium may be controlled directly in the transition area. Thus, it is no longer necessary (but it is still possible) to have multiple inlets or outlets for adjusting the flow of the heat transfer medium and to provide a flap or the like in each inlet or outlet. Further, by using the flow control arrangement, at least a part of the flow of the heat transfer medium may be directed to different areas of the boundary region.

By closing the flow control arrangement, in an idle mode, cold medium from other parts of the system in which the energy storage device may be implemented may be prevented from flowing into the heat storage material and hot medium may be prevented from flowing out of the heat storage material. The closing of the flow control arrangement may reduce natural convection which may be caused by rising hotter medium and sinking colder medium. Thus, the efficiency of the storage may be improved.

The convection flow may lead to an inclination of a temperature profile within the heat storage material. By means of the flow control arrangement, the inclined temperature profile may be aligned to a reference temperature profile. Thus, prematurely end of discharging and charging processes of the energy storage device may be prevented.

The transition area is preferably the space between the port and the heat storage material, in particular between the port and a support/retaining structure of the heat storage material. The transition area may be filled with the medium. Preferably, no further structures except the flow control arrangement are arranged inside the transition area.

The transition area may have a tapered portion, e.g. a nozzle-shaped section. The tapered portion may lead from the boundary region to the port. Flow speed and pressure of the heat transfer medium entering/leaving the energy storage device through the port may be adjusted by providing such a tapered portion. In particular, the transition area may be used for evenly distributing the heat transfer medium into the energy storage device and/or for reducing the flow speed of the medium.

The energy storage device may comprise an actuator (electrical (motor), electro-magnetic, hydraulic/pneumatic...) by which the flow control arrangement is controllable, e.g. by mechanically adjusting the position of a flow control element of the flow control arrangement. A control signal(s) from a control unit may be provided to the actuator to control the actuator.

Boundary region may be the region/interface between the space of the transition area and the storage material including its retaining structure. In particular, the boundary region may be the region between the heat transfer medium in the transition area and the heat storage material, in particular the region where the heat transfer medium enters or leaves the heat storage material.

Adjusting the flow of the heat transfer medium may comprise a change of the flow direction of the medium, a change of the flow distribution across the boundary region and/or a change of the amount of the medium passing the flow control arrangement (i.e. blocking of the medium). The flow of the heat transfer medium is preferably a mass flow of the heat transfer medium.

The medium may flow into the energy storage device through the port and in particular may flow out of the device through another port. Alternatively, the medium may be sucked out of the energy storage device through the port, if for example the energy storage device is to be operated with underpressure relative to the other port.

In a charging mode of the energy storage device, thermal energy may be provided to the energy storage device, in particular to the heat storage material, which is e.g. converted from electrical energy, taken from an existing heat cycle or is available as residual or waste heat. For example, the energy storage device may be provided with thermal energy by a heat source using or being at least one of the following: exhaust gas, heat pumps, process steam, solar thermal heaters, resistive heaters, plasma torches, inductive heaters, burners with different fuels (e.g. hydrogen, bio-gas, natural gas, ethanol, ammonia, peat, hard coal, lignite, wood, wood pellets, gasoline, oil), waste combustion or geothermal energy.

In a discharging mode of the energy storage device, the thermal energy stored in the energy storage device may be transferred to the heat transfer medium (herein called 'medium') and used e.g. for conversion into electrical energy, for (industrial) processes requiring heat and/or district heating.

The heat transfer medium may be a gaseous medium, in particular air.

Preferably the flow control arrangement may have first and second ports, wherein the flow control arrangement may be provided on the first, the second or both ports. The first port may be arranged at a first side and the second port may be arranged at a second side of the energy storage chamber, wherein the first port operates as an inlet (outlet) and the second port as an outlet (inlet) during a charging mode (discharging mode) of the energy storage device. Additionally or alternatively, more than one port may be provided at the first side and/or second side of the energy storage chamber.

In an embodiment, the flow control arrangement is a first flow control arrangement arranged in the first transition area and the port is a first port, wherein the energy storage device comprises a second flow control arrangement arranged in a second transition area between a second port and the heat storage material.

Thus, the flow of the heat transfer medium may be adjusted at the first and/or second port of the energy storage device. The flow of the medium may be adjusted when the medium flows into the energy storage device and/or when the medium exits the energy storage device, independent of the flow direction of the heat transfer medium.

The medium may flow into the energy storage device through the first (second) and may flow out of the device through the second (first) port. Alternatively, the medium may be sucked out of the energy storage device through the first (or second) port, if for example the energy storage device is to be operated with underpressure relative to the second (or first) port.

Preferably, the first and second transition areas, in at least one or both of which a flow control arrangement is arranged, are arranged at opposing sides of the energy storage device.

It should be clear that all features disclosed herein with respect to the flow control arrangement in the transition area are applicable in general to a flow control arrangement arranged in the first and/or the second transition area.

In an example, the flow control arrangement is controllable to take on a closed state in which the flow of the heat transfer medium past the flow control arrangement is at least partially blocked, and/or a fully opened state in which the flow control arrangement passes the flow of the heat transfer medium.

'At least partially blocked' may mean that only a very small part of the flow of the heat transfer medium can flow through the flow control arrangement, e.g. that at least 70, 80, 90, or 95 % of the flow of the medium in the fully opened state is blocked by the flow control arrangement in the closed state. Preferably, more than 95% of the flow is blocked.

The energy storage device may comprise a control unit configured to operate the energy storage device in an idle mode. The control unit may be configured to control the flow control arrangement to take on the closed state when operating in the idle mode.

In an embodiment, the energy storage device comprises the first flow control arrangement in the first transition area and the second flow control arrangement arranged in a second transition area. The control unit may be configured to control at least one of the first and second flow control arrangements to take on the closed state when operating in the idle mode. Preferably, in the idle mode, one of the first and second flow control arrangements maintains an open state. The flow control arrangement in the open state may function to equalize the pressure of the energy storage device.

In such idle mode, the control unit may control an energy storage system such that there is no active flow of the medium (which e.g. could be caused by a blower) through the energy storage device, i.e. no heat transfer medium is circulated through the energy storage device. An active (or actively driven) flow is present in a charging or discharging mode of the energy storage device.

In a system with multiple storage devices, one storage device may be in idle mode or discharging mode or charging mode. The number of storage devices is not limited and any combinations are possible. For example, a storage device may be in idle mode, another in charging mode, and another in discharging mode.

A temperature gradient may exist in the storage material, in particular an area in which the temperature change is largest within the storage material. In the area of the temperature gradient in the storage material, a convection flow may occur due to rising hotter medium and sinking colder medium. The convection flow may cause the temperature front of the gradient (a temperature profile, in particular an isothermal surface) to become inclined (e.g. with respect to a vertical direction if flow through heat storage material is in horizontal direction). A part of the convection flow may be partly outside the heat storage material in the transition area.

In the closed state, a flow of the medium within the storage chamber is blocked by the flow control arrangement, i.e. the medium within the heat storage material is isolated from heat transfer medium between the flow control arrangement and the connected piping. Thus, hot medium can be prevented from escaping out of the heat storage material. Furthermore, cold medium can be prevented from flowing into the heat storage material. Thus, the efficiency of the energy storage device can be improved.

Thus, closing the flow control arrangement may suppress the convection flow through the transition area (in particular in the idle mode), resulting in a significant reduction of the convection flow within the storage material. Thus, losses from natural convection can be reduced.

Further, flows of the heat transfer medium through the storage chamber in an idle mode, e.g. caused by pressure differences from remote parts of the system in which the energy storage device is implemented, can be blocked by closing the flow control arrangement.

'Fully opened state' preferably means that the flow of the medium is not or substantially not affected when flowing past the flow control arrangement.

The energy storage device may be a horizontal energy storage device (or a vertical energy storage device), wherein the main flow direction of the heat transfer medium through the energy storage device, e.g. the storage chamber, is in horizontal (vertical) direction.

In an embodiment, the flow control arrangement comprises at least one flow control element, wherein the flow control element is rotatably mounted or attached in the transition area and is pivotable to adjust the flow of heat transfer medium. Alternatively, the flow control element is slidably mounted in the transition area and is slidable to adjust the flow of heat transfer medium.

In an example, the flow control element is at least one of: a flap which is rotatably mounted or attached in the transition area; a plate element being insertable into the transition area; a foldable or rollable element; or a pair of perforated plate elements slidable against each other to form a ventilation slider.

In case of the flap, in the fully opened state of the flap, the flap is preferably arranged parallel or substantially parallel to a main flow direction of the heat transfer medium in the transition area, or parallel to a wall of the transition area.

The rotations axis of the flap may be arranged at an end region of the flap, or at the center or substantially the center the flap.

In case of a plate element, the plate element may be configured to block the flow of the medium in a fully or substantially fully inserted state (closed state), and to allow flow of the medium past the plate element in a fully retracted state (fully opened state).

The energy storage device may comprise a chamber sealingly connected at the outside of the transition area/storage chamber for receiving the plate element arranged within the transition area when the plate element is not fully inserted into the transition area.

Preferably, the plate element is arranged perpendicular or substantially perpendicular to the inner wall of the storage chamber.

In case of a foldable or rollable element, the fully folded/rolled-up state corresponds to the fully opened state and the fully unfolded/unrolled state corresponds to the closed state. Thereby, no additional chamber is needed for receiving the rollable/foldable element as in case of the plate element when the plate element is not fully inserted in the transition area. This may simplify the overall construction of the energy storage device and may save space.

Preferably, the pair of perforated plate elements are positionable such that, in a fully opened state, the perforations of each plate element are aligned to each other allowing flow of the medium through the plate elements, and in a closed state of the plate elements, the perforations of the plate elements are blocked by the respective other plate element allowing no or substantially no flow of the medium through the plate elements.

In an example, the flow control arrangement is controllable to direct at least a part of the flow of the heat transfer medium to different areas of the boundary region, for example when the device is operated in a charging mode or in a discharging mode. Thus, an inclined temperature profile within the heat storage material (explained in the following) can be compensated by directing a part of the flow of the heat transfer medium to a specific area of the boundary region.

In an embodiment, the flow control arrangement is controllable to take on a first state in which a part of the heat transfer medium is directed by the flow control arrangement towards a first area of the boundary region, and a second state in which a part of the heat transfer medium is directed by the flow control arrangement towards a second area of the boundary region, the first area being different from the second area.

By blocking flow in part of the boundary region, velocity as well as pressure drop increases. As an alternative to only blocking the flow of the heat transfer medium, the energy storage device of the invention may direct the flow of the heat transfer medium and thus may control the flow distribution. Therefore, the flow of the medium may be directed to different areas of the boundary region while pressure drops may be reduced compared to only blocking the flow of the medium.

The flow control arrangement may direct the flow of the heat transfer medium directly within the energy storage device rather than only adjusting the general flow of the medium before entering the energy storage device.

The energy storage device may be a horizontal energy storage device, wherein the main flow direction of the heat transfer medium through the energy storage device is horizontal. In a horizontal energy storage device, the first area of the boundary region may be above the second area of the boundary region.

The energy storage device may be a vertical energy storage device, wherein the main flow direction of the heat transfer medium through the energy storage device is vertical. In a vertical energy storage device, the first area of the boundary region may be arranged vertically adjacent/next to the second area of the boundary region. In a sideview of the vertical energy storage device, the first area may be on a left side and the second area may be on a right side of a center line, or vice versa.

The flow control arrangement may comprise a first portion and a second portion arranged adjacent/next to the first portion, wherein each portion may comprise one or more flow control elements. In a horizontal energy storage device, the first portion may be below the second portion, and in a vertical energy storage device, the first portion may be arranged horizontally next to the second portion.

Preferably, in the charging mode, the flow of the heat transfer medium may be directed to the second area, and, in the discharging mode, the flow of the heat transfer medium may be directed towards the first area.

In the second state, the first portion of the flow control arrangement may direct a part of the medium to the second area of the boundary region. In this case, the first portion of the flow control arrangement may be in a closed or partially closed state or may be in a position (position between the fully opened and closed state) directing the medium to the second area of the boundary region. The second portion of the flow control arrangement may be in an open state passing the flow of the heat transfer medium.

In the first state, the second portion may direct a part of the medium to the first area of the boundary region. In this case, the second portion of the flow control arrangement may be in a closed or partially closed state or may be in a position (position between the fully opened and closed state) directing the medium to the first area of the boundary region. The first portion of the flow control arrangement may be in an open state passing the flow of the heat transfer medium.

Preferably, the position(s) of the flow control arrangement and in particular of the flow control element(s) is/are adjustable stepwise or continuously.

In case of a flow control element being a rotatably movable flap, the heat transfer medium may be directed to different areas of the boundary region in dependence on the inclination of the flap.

In case of a flow control element being a plate element or a rollable/foldable element, any position between the fully inserted/(unfolded/unrolled) and fully raised/(folded/rolled-up) state preferably allows heat transfer medium to flow past the plate element. The flow of the heat transfer medium can be directed at least partially in dependency of the positions between the fully inserted and fully raised state of the plate element.

For example, in case of a horizontal energy storage device as mentioned above, the plate element may be raised and inserted vertically, and in case of a vertical energy storage device, the plate element may be raised and inserted horizontally. If the plate element is raised partially, the flow of the heat transfer medium is directed to the second area of the boundary region being adjacent/next to the first area of the boundary region (i.e. in a horizontal energy storage device, the second portion may be below the first portion; in a vertical energy storage device, the first portion may be horizontally next to the second portion). If the plate element is fully raised, the flow of the heat transfer medium is directed to the entire boundary region, in particular to the first and second area.

In case of the above arrangement with a pair of perforated plate elements, any position between the fully opened state and the closed state may be possible. In this case the perforations of both plates are not fully aligned with each other, i.e. flow of the heat transfer medium through perforations is reduced.

In an example, the flow control arrangement comprises a plurality of flow control elements arranged adjacent to each other such that, in a closed state of the flow control arrangement, the flow control elements form a plane blocking or substantially blocking the flow of the heat transfer medium past the plurality of flow control elements. The closed state corresponds to the above mentioned closed state of the flow control arrangement.

Therefore, the heat transfer medium within the heat storage material or coming from the heat storage material is blocked by the flow control elements, i.e. the heat transfer medium within the heat storage material is isolated from the side at which the piping is connected.

By the plurality of flow control elements, the heat transfer medium may be directed to specific regions within the energy storage device, i.e. some control elements can be controlled to direct the flow of the heat transfer medium to a specific area by e.g. rotating the control elements in case of flaps, or to be closed such that the flow passes only through the control elements being in an opened state. Thus, the flow of the heat transfer medium can be adjusted individually.

In an example, the flow control arrangement comprises at least 2, 3, 4, 5, 6, 7, 9, 13 or 16 flaps, which are arranged adjacent to each other such that, in a closed state of the flow control arrangement, the flaps form a plane blocking or substantially blocking the flow of the heat transfer medium past the plurality of flaps. In a horizontal energy storage device, the flaps may form a vertical plane in the closed state. In a vertical energy storage device, the flaps may form a horizontal plane in the closed state.

Each flap may comprise a rotation axis which is preferably arranged at or substantially at the center of the flap. In a horizontal or vertical energy storage device, the rotation axis of each flap is preferably arranged in a horizontal plane. Thus, the flow of the medium may be directed to different areas of the boundary region, namely to an upper or lower area of the boundary region in a horizontal energy storage device. In a horizontal energy storage device, the rotation axes of the flaps may form a vertical plane, and in a vertical energy storage device, the rotation axes of the flaps may form a horizontal plane. Preferably, in a horizontal or vertical energy storage device, in a fully opened state, each flap is arranged parallel to the main flow direction of the medium through the energy storage device.

In an embodiment, the flow control arrangement comprises two flaps each having a rotation axis at an end portion of the flap, wherein each flap is arranged at two opposing sides within the transition area. Each rotation axis may be mounted at or near an inner wall of the storage chamber.

The fully opened state of each flap may be limited by a stopping element, e.g. a mechanical stop, arranged within the transition area. The stopping element may be configured such that the flaps hitting the stopping elements form a funnel in between for the heat transfer medium. The funnel may direct the heat transfer medium and/or may reduce the velocity of the flow of the medium. Reduction of the velocity of the flow of the medium may lead to a lower heat exchange and lower pressure drop within the heat storage material and thus to a higher overall efficiency of the heat storage device.

In a further embodiment, the energy storage device comprises two ports arranged parallel to each other, wherein in the transition area a separation element is arranged between the ports separating the transition area into a first region and a second region. The separation element is preferably arranged parallel to a longitudinal axis of the energy storage device (transition area). One flap may be mounted rotatably on or at each side of the separation element.

The 'longitudinal axis' of the energy storage device (transition area) may be the axis of the energy storage device (transition area) in a main flow direction of the heat transfer medium through the energy storage device.

Each flap may be arranged such that in a closed state the first or second region of the transition area is blocked or substantially blocked. When both flaps are closed, the flow of the heat transfer medium is completely or substantially completely blocked.

When both flaps are in the fully opened state, the heat transfer medium can pass. The entire flow of the heat transfer medium may be directed to the first or second region within the transition area by positioning one flap in an opened state, preferably the fully opened state, and the other flap in the closed state.

In an example, the flow control arrangement is arranged adjacent to or at the boundary region, and/or the transition area has a longitudinal extension, wherein the flow control arrangement is arranged within a range of less than 30%, 20%, or 10% of the longitudinal extension of the transition area adjacent to the boundary region. Additionally or alternatively, the flow control arrangement comprises at least one flow control element and each flow control element is rotatable about a rotation axis and has, in a fully opened state, a longitudinal extension perpendicular to the rotation axis and the distance between the flow control element in the fully opened state and the boundary region is at most 300%, 200%, or 100% of the longitudinal extension of the flow control element, and in some examples at most 50%, 30% or 10%. This preferably applies to an energy storage device being a horizontal energy storage device.

In an example, the flow control arrangement is arranged adjacent to or at the port, and/or the transition area has a longitudinal extension, wherein the flow control arrangement is arranged within a range of less than 75%, 50%, 30%, 25%, 20%, or 10% of the longitudinal extension of the transition area adjacent to the port. Additionally or alternatively, the flow control arrangement comprises at least one flow control element and wherein each flow control element is rotatable about a rotation axis and has, in a fully opened state, a longitudinal extension perpendicular to the rotation axis, wherein the distance between the flow control element in the fully opened state and the port is at most 300%, 200%, or 100% of the longitudinal extension of the flow control element, and in some examples at most 50%, 30% or 10%. This preferably applies to an energy storage device being a vertical energy storage device.

The longitudinal extension of transition area may be the extension of the transition area in main flow direction of the heat transfer medium through the transition area.

Keeping the distance between the flow control arrangement and the boundary region as small as possible has the advantage that possible natural convection in the idle mode (above mentioned) of the energy storage device can be reduced. This may increase the efficiency of the energy storage device.

In an embodiment, the flow control arrangement comprises at least two flow control elements, wherein the flow control elements are controllable individually and/or as a group by using a control unit.

By individual adjustment, a specific direction of the flow of the heat transfer medium is possible. Controlling groups of flow control elements may simplify the control of the plurality of flow control elements. The flow control elements may be adjusted in such a way that the heat transfer medium is directed in a specific direction or to a specific region of the boundary region. Alternatively or additionally, flow control elements may be closed in a specific region in which no flow is desired.

In an example, the energy storage device comprises a control unit, wherein the control unit is configured to control the flow control arrangement, wherein the control unit is further configured to adjust a temperature profile within the heat storage material by adjusting the flow of heat transfer medium through the boundary region by means of the flow control arrangement.

In an embodiment, a plurality of measurement elements are arranged within the storage chamber, each measurement element being configured to detect a temperature in the heat storage material, and wherein the control unit is configured to determine the temperature profile based on the detected temperatures.

Preferably, the measurement elements are temperature sensors such as thermocouples. The sensors may be distributed along an inner wall of the storage chamber enclosing the heat storage material.

Preferably, some of the measurement elements protrude into the volume enclosed by the heat storage material. Therefore, not only the temperature of the heat storage material at the inner wall but also the temperature of the heat storage material in distance to the inner wall may be detected.

By providing a plurality of measurement elements, the determination of the temperature profile may be more accurate and thus the adjustment of the flow of the heat transfer medium by means of the flow control arrangement based on the temperature profile may be more efficient.

In an example, if the control unit detects that the temperature profile is inclined with respect to the main flow direction of the medium through the device and in particular to a reference temperature profile, the control unit is configured to align the temperature profile with the reference temperature profile by adjusting the flow of the heat transfer medium through the storage chamber with the flow control arrangement. The temperature profile may in particular include an isothermal surface, e.g. defined at a position of a maximum temperature gradient, and inclination of the temperature profile may refer to an inclination of this isothermal surface with respect to the main flow direction or a desired reference isothermal surface defined by the reference temperature profile. It should be clear that such isothermal surface may generally be curved. The 'reference temperature profile' for a horizontal storage device may include a vertical plane, and for a vertical storage device may include a horizontal plane.

Preferably, the energy storage device has a longitudinal direction corresponding to the direction of flow of the heat transfer medium through the energy storage device, wherein the flow control arrangement is configured to control the flow of heat transfer medium into the boundary region in either a charging mode or a discharging mode of the energy storage device, wherein the control unit is configured to direct, by controlling the flow control arrangement the flow into an area of the boundary region downstream of which, in flow direction, the temperature profile, in particular a respective isothermal surface, is located closer to the boundary region than downstream of other areas of the boundary region.

Preferably, in the charging mode, heat transfer medium enters the energy storage device via the port which is arranged on a hot side of the energy storage device and in the discharging mode, the heat transfer medium enters the energy storage device via another port provided on a cold side of the energy storage device. Thus, the heat transfer medium flow through the energy storage device is preferably in opposite directions (i.e. it is reversed) in the discharging and charging mode.

A temperature gradient may form between the hot and the cold side of the energy storage device, and in particular of the heat storage material. If in the charging mode, hot medium is provided at the hot side, the temperature gradient (i.e. the region in the storage device in which the temperature change is largest) moves from the hot side to the cold side. If in the discharging mode, cold medium is provided at the cold side, the temperature gradient moves from the cold side to the hot side. Accordingly, an isothermal surface of the temperature profile of the storage device, which may be defined at a position of the largest temperature gradient or of an isothermal surface/front with a predefined temperature, such as the charging temperature of the storage device, may move towards the cold side during charging and may move towards the hot side during discharging. A convection flow may occur due to rising hotter medium and sinking colder medium. The convection flow may cause the temperature front of the temperature gradient to become inclined, i.e. the temperature profile and in particular the respective isothermal plane becomes inclined, for example with respect to the main flow direction or a reference temperature profile (e.g. a curved surface, or a vertical plane in case of a horizontal energy storage device). By providing hot medium to the hot side or cold medium to the cold side, the inclined temperature profile may be aligned to the reference temperature profile. For example, if medium enters the hot side during charging, the hot medium may be directed by the flow control arrangement into the area of the heat storage material downstream of which the isothermal surface has progressed most towards the hot side so as to push back the isothermal surface and straighten the isothermal surface. This applies correspondingly to the cold side. Thus, premature end of discharging and charging processes may e.g. be prevented.

The flow distribution of the heat transfer medium in a charge or discharge mode can be adjusted such that the flow of the heat transfer medium is directed to a first or second area of the boundary region / heat storage material.

In the charging mode the cold medium leaving the energy storage device may have to meet a determined temperature threshold. If the outlet temperature of the medium is higher than the threshold, the charging process may end. However, the inclination of the temperature profile might trigger the end of the charging process earlier than compared to a temperature profile aligned to a reference temperature profile (i.e. no inclination). By the control unit controlling the flow control arrangement in a way that rebalances the inclination of the temperature profile, more cold air can leave the thermal energy storage before the charging process ends. In other words, more thermal energy may be charged into the energy storage device.

In the discharge mode the hot medium leaving the energy storage device may have to meet a determined temperature threshold. If the discharge temperature falls below the threshold, the discharge process may end. However, the inclination of the temperature profile might trigger the end of the discharging process earlier than compared to a reference temperature profile (e.g. in case of a horizontal energy storage device a vertical plane). By the control unit controlling the flow control arrangement in a way that rebalances the inclination of the temperature profile, more hot air can leave the thermal energy storage before the stopping criteria ends the discharge process. In other words, more thermal energy can be discharged from the energy storage device.

In an embodiment, the port is a first port being operated as an inlet for the heat transfer medium in a discharging mode and as an outlet for the heat transfer medium in a charging mode, and wherein the energy storage device comprises a second port being operated as an outlet for the heat transfer medium in the discharging mode and as an inlet for the heat transfer medium in the charging mode. Thus, the flow direction of the heat transfer medium through the energy storage device is opposite in the charging and discharging mode. Preferably, the flow control arrangement is arranged in the transition area between the first port (cold side) and the heat storage material.

The storage device may have a hot port (inlet for charging and outlet for discharging) and a cold port (inlet for discharging and outlet for charging). For a modified distribution of the medium within the storage, the energy storage device may include a plurality of hot ports and/or a plurality of cold ports.

The energy storage device may be configured to store thermal energy at a temperature between 200 °C and 1000 °C, preferably between 400 °C and 1000 °C, more preferably between 500°C and 900°C when the storage device is in a charged state. For example, the temperature in the energy storage device may be kept between 550 and 800°C. In the discharging flow path, the temperature of the working fluid leaving the energy storage device may lie within the range of about 500°C to 800°C. When the thermal storage device is in an empty state, the temperature in the thermal storage device may lie in the range between ambient temperature and 800°C.

The heat storage material may comprise or consist of gravel, rubble, sand and/or grit. It may comprise or consist of rocks, bricks, stone, lava stone, granite, basalt, slag and/or ceramics, or a combination thereof, and can be provided as bulk material (it may be configured as pebble bed).

According to an embodiment, an energy storage system comprising an energy storage device as described herein, a heater, and a heat consumer, such as a heat recovery steam generator (HRSG), and preferably a blower for generating a flow of the heat transfer medium is provided. In a charging mode, the heat transfer medium is passed through the heat source (e.g. electrical heater or heat exchanger), whereby the temperature of the medium is increased, and is further passed through the energy storage device, when the medium transfers its heat to the heat storage material. In a discharging mode, the medium enters the storage device in a low temperature state which results in a heat transfer from the heat storage material to the medium. The heated medium is then passed through the heat consumer which transfers the heat from the medium to a working fluid of the heat consumer.

According to a further embodiment of the invention, a method of operating an energy storage device, in particular an energy storage device as described herein, is provided. The energy storage device comprises a storage chamber, wherein the storage chamber comprises a port configured to pass a heat transfer medium via piping connectable to the port, a heat storage material disposed in the storage chamber and configured to exchange thermal energy with the heat transfer medium when the heat transfer medium flows through the energy storage device via the port, and a flow control arrangement arranged in a transition area between the port and the heat storage material, wherein the flow control arrangement (20) is configured to be controllable to adjust a flow of the heat transfer medium through a boundary region between the transition area and the heat storage material. The method comprises adjusting, by controlling the flow control arrangement, the flow of the heat transfer medium through the boundary region.

The method may be performed by an energy storage device having any of the configurations described herein or energy storage system comprising the energy storage device. The method may further comprise any of the steps described herein with respect to the device and/or system. Likewise, the energy storage device/system may be configured to carry out the method in any of the implementations disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing an energy storage device.
Fig. 2 is a schematic drawing showing an energy storage device with a flow control arrangement according to an embodiment.
Fig. 3 is a schematic drawing showing the energy storage device of Fig 2 with another state of the flow control arrangement.
Fig. 4 is a schematic enlarged view of the flow arrangement of Fig. 3 in a fully opened state.
Fig. 5 is a schematic enlarged view of the flow arrangement of Fig. 4 in a closed state.
Fig. 6 is a schematic drawing showing an energy storage device with a flow control arrangement according to a further embodiment.
Fig. 7 is a schematic drawing showing an energy storage device with a flow control arrangement according to a further embodiment.
Fig. 8 is a schematic drawing showing an energy storage device with two ports and with a flow control arrangement according to a further embodiment.
Fig. 9 is a schematic drawing showing another embodiment of a flow control arrangement.
Fig. 10 is a schematic drawing showing the energy storage device of Fig 1 with a temperature profile within the heat storage material.
Fig. 11 is a schematic drawing showing the energy storage device of Fig 10 with the flow control arrangement of Fig. 2 in a closed state according to an embodiment.
Fig. 12 is a flow diagram illustrating a method of determining and adjusting a temperature profile within the heat storage material according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

Fig. 2 is a schematic drawing showing an energy storage device 2 with a flow control arrangement 20 according to an embodiment. The energy storage device 2 of Fig. 2 is a modification of the energy storage device of Fig. 1 so that the above explanations are equally applicable.

The flow control arrangement 20 is arranged in the transition area 18 between the port 4 and a boundary region 25. The boundary region 25 is the region/interface between the space of the transition area 18 and the storage material 10 including its retaining structure 14. In particular, the region where the heat transfer medium enters or leaves the heat storage material is the boundary region 25. A piping 16 connected to the port 4 for providing heat transfer medium into the energy storage device 2 (or discharging medium therefrom)is shown. The flow control arrangement 20 is controllable to adjust a flow of the heat transfer medium through the boundary region 25 between the transition area 18 and the heat storage material 10, in particular the retaining structure 14, e.g. a grate, connected to the heat storage material 10.

The transition area 18 may be formed as a nozzle shaped section 24 as it is shown in Fig. 2. The nozzle shaped section 24 may reduce the flow velocity of the heat transfer medium entering the energy storage device 2 and therefore reduces the pressure drop.

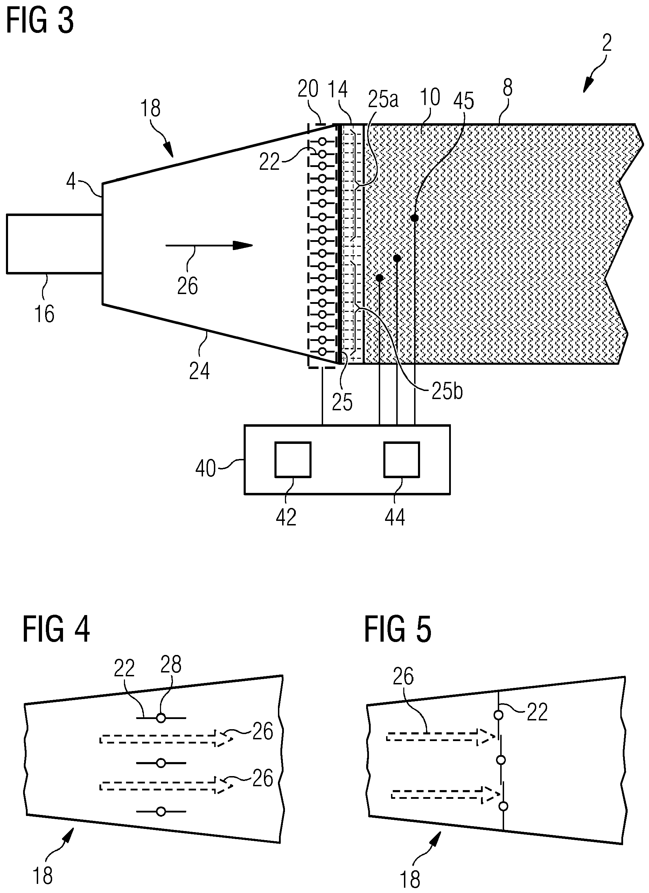

The flow control arrangement 20 may comprise a plurality of flow control elements 22 arranged adjacent to each other. As shown in Fig. 2, the flow control elements 22 are flaps, wherein each of the flaps 22 is rotatably mounted or attached within the transition area 18. The flaps 22 are arranged such that in a closed state of each flap 22, the flaps 22 form a plane blocking or substantially blocking the flow of the heat transfer medium past the flaps 22 (this closed state blocking the flow 26 is shown in Fig. 5).

The flaps 22 shown in Fig. 2 are in an opened state such that the flow of the heat transfer medium can pass the flow control arrangement 20.

Fig. 3 is a schematic drawing showing the energy storage device of Fig 2 with another state of the flow control arrangement and Fig. 4 is a schematic enlarged view of the flow arrangement of Fig. 3 in a fully opened state. Each of the flaps 22 comprises a rotation axis 28, wherein the rotation axis 28 is preferably arranged in the center or substantially in the center of the flap 22. In comparison to Fig. 2, the flaps 22 of Fig. 3 are positioned in a fully opened state. In the fully opened state, the flaps 22 are preferably positioned parallel or substantially parallel to the main flow direction 26 of the heat transfer medium through the energy storage device 2.

The flow control arrangement 20 may be controllable such that at least a part of the flow of the heat transfer medium is directed to a first area 25a of the boundary region 25 or to a second area 25b of the boundary region 25 being different from the first area. In Figs. 1 and 2 (and also in Figs. 3 to 11) the first area is arranged above the second area.

For example when it is desired to direct the flow of the heat transfer medium to the first area 25a of the boundary region 25, the flaps 22 or at least some of the flaps 22 may be rotated into a position such that the flow is directed to the first area 25a. As shown in Fig. 2, the flaps 22 in a lower region of the flow control arrangement 20 are positioned such that the medium is directed to the first area 25a of the boundary region 25. Alternatively, the flaps 22 in the lower region may be closed and the flaps 22 in an upper region of the flow control arrangement 20 may be positioned in an opened or fully opened state.

For example when it is desired to direct the flow of the heat transfer medium to the second area 25b of the boundary region 25, the flaps 22 or at least some of the flaps 22 may be rotated into a position such that the flow is directed to the second area 25b. As shown in Fig. 2, the flaps 22 in the upper region of the flow control arrangement 20 are positioned such that the medium is directed to the second area 25b of the boundary region 25. Alternatively, the flaps 22 in the upper region may be closed and the flaps 22 in the lower region may be positioned in an opened or fully opened state. Thus, directing flow of medium to different areas of the boundary region is possible.

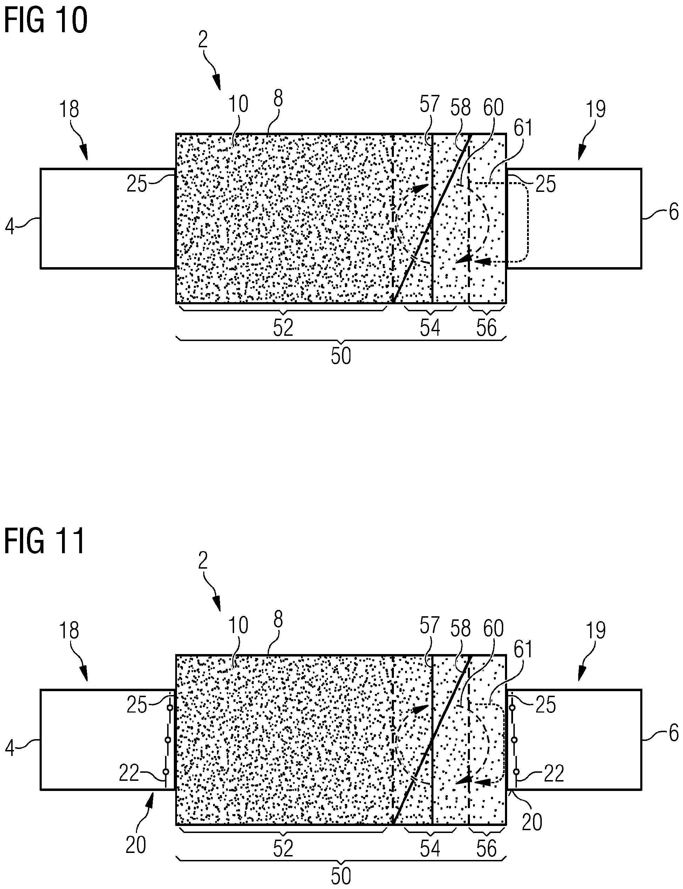

Additionally or alternatively, the flow control arrangement 20 may be arranged in a second transition area 19 between a boundary region 25 and a second port 6 (cold side) as shown in Fig. 11. As an example, in Fig. 11, a first flow control arrangement 20 is arranged in the first transition area 18 (hot side) and a second flow control arrangement 20 is arranged in the second transition area 19 (cold side).

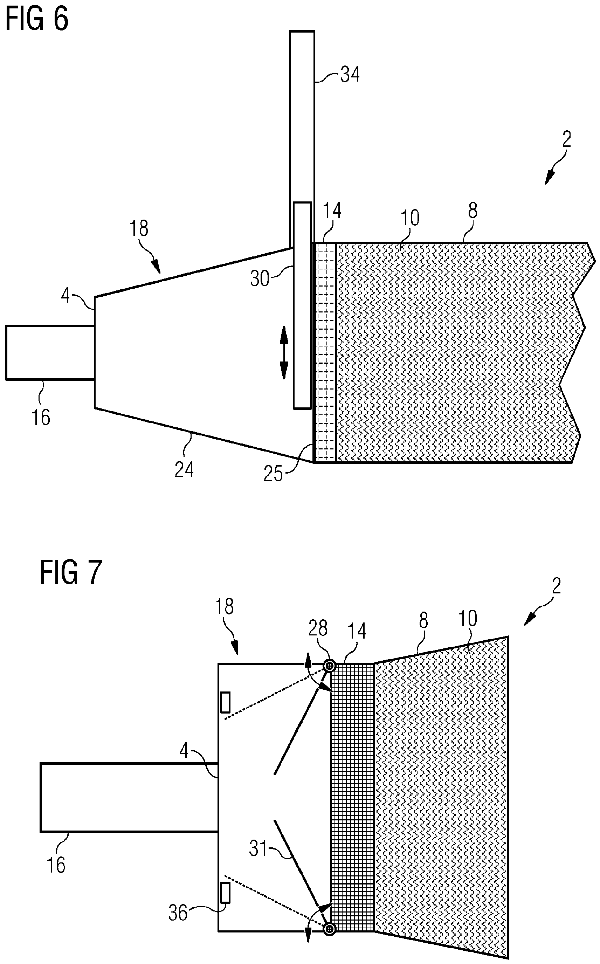

Fig. 6 is a schematic drawing showing an energy storage device with a flow control arrangement according to a further embodiment. The energy storage device 2 of Fig. 6 is (except the flow control arrangement) similar to the energy storage device of Fig. 2 so that the above explanations are equally applicable. The flow control arrangement 20 comprises a flow control element 30 being a plate element which is insertable into the transition area 18 (movement of plate element indicated by arrow). The plate element 30 is preferably arranged orthogonally or substantially orthogonally to the main flow direction 26 of the heat transfer medium. The plate element 30 may block the flow of the medium in a fully inserted state and may pass the flow of the medium in an at least partially retracted (raised) position. A chamber 34 for receiving the plate element 30, if the plate element 30 is not fully inserted into the transition area may be provided. The chamber 34 is preferably sealingly connected to an outer wall of the nozzle section 24.

Fig. 7 is a schematic drawing showing an energy storage device with a flow control arrangement according to a further embodiment. The energy storage device 2 of Fig. 7 is (except the flow control arrangement) similar to the energy storage device of Fig. 2 so that the above explanations are equally applicable. The flow control arrangement 20 comprises two control elements 31 being flaps 31, wherein each flap 31 is mounted rotatably within the transition area 18. The flaps 31 are positioned such that in a closed state, the flaps 31 form a plane blocking or substantially blocking the flow of the medium. In particular, the rotation axis 28 of each flap is positioned at an end region of the flap 31.

The fully opened state of each flap 31 may be determined by a stopping element 36, e.g. a mechanical stop. The stopping elements 36 are preferably positioned such that in an fully opened state of the flaps 31, the flaps 31 hitting the stopping elements 36 form a funnel for directing the flow of the heat transfer medium and/or reducing speed of the flow.

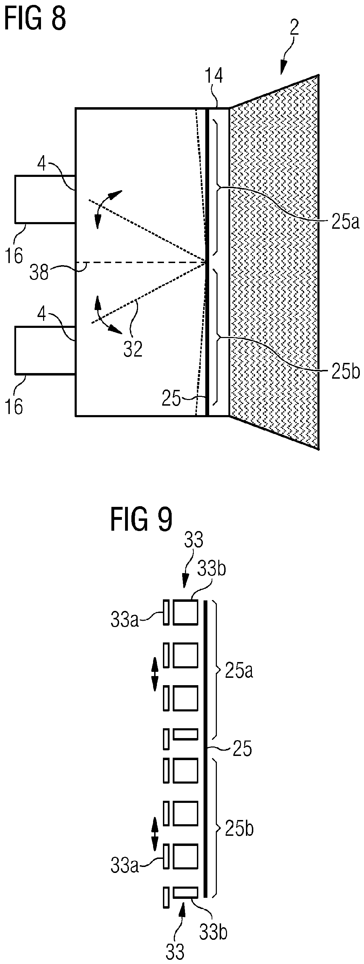

Fig. 8 is a schematic drawing showing an energy storage device with two ports on one side and a flow control arrangement according to a further embodiment. The energy storage device 2 of Fig. 8 is (except the flow control arrangement and the ports) similar to the energy storage device of Fig. 2 so that the above explanations are equally applicable. In this embodiment, the energy storage device 2 comprises two ports 4 (to each port a piping 16 may be connected) arranged on top of each other, preferably parallel to each other. In the transition area 18 a separation element 38 is arranged between the ports 4 separating the transition area 18 in a first region and a second region being below the first region. The separation element 38 is preferably arranged parallel to a longitudinal axis of the energy storage device 2 (transition area 18). Further, two control elements 32 being flaps are provided, wherein one flap is mounted rotatably on or at each side of the separation element 38.

The flow of the medium is separated into a first flow (above the separation element) and a second flow (below the separation element). In a closed state of both flaps 32, the flow of the medium through the energy storage device 2 is preferably blocked. In a fully opened state of a flap, the flow of medium can pass past the flap. In a fully opened state, the flap 32 is preferably parallel or substantially parallel to the separation wall 38, and in particular is in contact with the separation wall 38.

By closing the flap 32 arranged in the upper region (above the separation element), the medium can be directed past the lower flap 32 to the second region 25b of the boundary region 25. By closing the flap 32 arranged in the lower region (below the separation element), the medium can be directed past the upper flap 32 to the first region 25a of the boundary region 25. Thus, the two flaps 32 enable the directing of the flow of medium to different areas 25a, 25b of the boundary region 25.

Fig. 9 is a schematic drawing showing another embodiment of a flow control arrangement. This flow control arrangement 20 may be used in the energy storage device of Fig. 2 instead of the flow control arrangement arranged therein. The flow control arrangement 20 comprises a pair 33 of perforated plate elements 33a, 33b which are positionable such that, in a fully opened state, the perforations of each plate element 33a, 33b are aligned to each other allowing flow of the medium through the plate elements 33a, 33b. In a closed state of the plate elements 33a, 33b, the perforations of the plate elements 33a, 33b are blocked by the respective other plate element 33a, 33b allowing no or substantially no flow of the medium through the plate elements. The flow control arrangement 20 may comprise two pairs 33 of perforated plate elements 33a, 33b which are individually controllable. In particular, in a horizontal energy storage device, a first pair may be arranged above a second pair. Thus, at least a part of the flow of the medium may be directed to the first area of the boundary region by closing the lower pair 33 or to the second area of the boundary region by closing the upper pair 33.

Figs. 2 to 8 only show a port 4 on one side of the energy storage device 2. Alternatively, a port 6 (see Fig. 1) may be provided on another side of the energy storage device 2, or one port 4, 6 is provided on each side of the energy storage device 2. Preferably, the energy storage device 2 has two ports on opposite sides. Preferably one port is at least provided on the cold side of the heat storage material (i.e. on the side at which the medium may leave the storage device during charging and may enter the storage device during discharging). More than one port may be provided on at least one of the two sides of the energy storage (see Fig. 8 with two ports on one side).

Fig. 10 is a schematic drawing showing the energy storage device of Fig 1, wherein the heat storage material comprises a hot end (left side) and a cold end (right side) enclosing in-between a temperature distribution 50 from high to low temperatures. The temperature distribution 50 comprises a high temperature region 52, a medium temperature region 54 including temperature profiles 57, 58, and a low temperature region 56. For simplification, the temperature profiles 57, 58, in particular respective isothermal surfaces, are shown in Figs. 10 and 11 as planes. The temperature profile 57 is in particular shown as a vertical plane. The temperature profiles may however be curved surfaces. Such a temperature distribution 50 may correspond to a partially charged state. For example, during charging, hot medium may enter the energy storage device 2 through the first port 4 (hot side), and the medium temperature region 54 including the temperature profiles 57, 58 may be shifted towards the second port 6 (cold side). For example, during discharging, cold medium may enter the energy storage device 2 through the second port 6 (cold side), and the medium temperature region 54 including the temperature profiles 57, 58 may be shifted towards the first port 4 (hot side). The illustrated temperature profile 57 may correspond to a desired reference temperature profile.

A convection flow 60 may occur due to rising hotter medium and sinking colder medium. The convection flow 58 may cause the temperature profile 57, in particular the respective isothermal surface, to become inclined with respect to the main flow direction of the medium, e.g. with respect to a vertical direction for a horizontal storage device or with respect to a horizontal direction for a vertical storage device. The convection flow 60 may be a circular flow. A part 61 of the convection flow 60 may be outside the heat storage material 10 in the transition area 19, as the flow of the medium may use the transition area as a bypass that is not subject to the pressure drop caused by the storage material.

Fig. 11 is a schematic drawing showing the energy storage device of Fig 10 with the flow control arrangement of Fig. 2 in a closed state according to an embodiment. The closed state is preferably used in an idle mode of the energy storage device 2, in which no active mass flow through the energy storage device 2 is present. In comparison to Fig. 10, in the closed state of the flow control arrangement 20 arranged in the second transition area 19, the medium within the heat storage material 10 is blocked by the flow control arrangement 20, i.e. the medium within the heat storage material is isolated from heat transfer medium between the flow control arrangement 20 and the port 6 (cold side). Thus, the part 61 of the convection flow 60 outside the heat storage material 10 in the transition area 19 as shown in Fig. 10, may be prevented by using the flow control arrangement 20 in a closed state. Optionally, another flow control arrangement 20 may be arranged at an opposing end of the energy storage device 2, namely in the first transition area 18. The flow control arrangement 20 in the first transition area 18 (hot side) may be termed first flow control arrangement, and the flow control arrangement 20 in the second transition area 19 (cold side) may be termed second flow control arrangement.

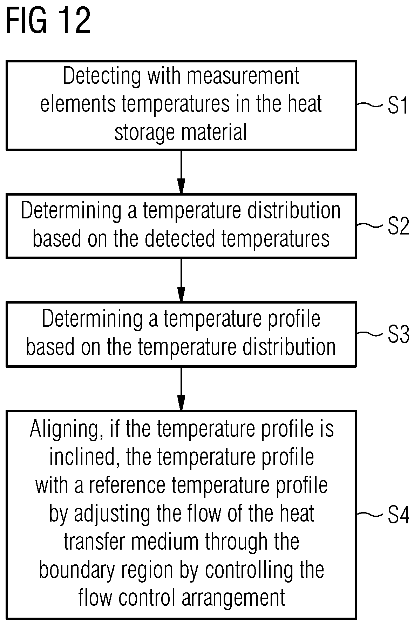

In the following, with respect to Figs. 3 and 12, it is exemplarily described how the temperature distribution 50 and the temperature profile 57 are determined and how the inclined temperature profile 58 can be aligned to the reference temperature profile 57.

As shown in Fig. 3, the energy storage device 2 may comprise a control unit 40. The control unit 40 may include a processing unit 42 and a memory 44. The processing unit 42 may include any type of processor, such as a microprocessor, an application specific integrated circuit, a digital signal processor or the like. Memory 44 may include volatile and non-volatile memory, in particular RAM, ROM, FLASH-memory, a hard disc drive and the like. The memory 44 may store control instructions which when executed by processing unit 42 cause the control system to perform any of the methods disclosed herein. Control unit 40 may further include input and output interfaces for receiving data and for transmitting control data and control commands to the energy storage device. The control unit 40 may include a user interface (e.g. including a display and an input device) via which user input from an operator of the energy storage device 2 can be received and may include a data connection for receiving remote commands.

Further, the energy storage device may comprise a plurality of measurement elements 45 which are arranged within the storage chamber 8. Each measurement element 45 is configured to detect a temperature in the heat storage material 10 (method step S1 in Fig. 12). Preferably, the measurement elements 45 are distributed along the storage chamber enclosing the heat storage material. More preferably, the measurement elements 45 protrude from an outer wall of the storage chamber 8 into the volume enclosed by the storage chamber 8. Based on the detected temperatures, the temperature distribution 50 is determined by the control unit 40 (method step S2 in Fig. 12). Further, based on the temperature distribution 50, the temperature profile 58, e.g. a respective isothermal surface, is determined by the control unit 40 (method step S3 in Fig. 12).

Preferably, when the control unit 40 detects that the temperature profile 58 is inclined with respect to the reference temperature profile 57, the control unit 40 is configured to align the temperature profile 58 with the reference temperature profile 57 by adjusting the flow of the heat transfer medium through the storage chamber 8 with the flow control arrangement 20 (method step S4 in Fig. 12)

With respect to the inclined temperature profile 58 shown in Fig. 10, the control unit 40 is preferably configured to direct, by controlling the flow control arrangement 20, in a charging mode (i.e. heated heat transfer medium enters energy storage device at the hot port 4), the flow of the heat transfer medium to the second (lower) area of the boundary region 25 of which the temperature profile 58 is located closer to the boundary region 25 than downstream of other areas of the boundary region 25. In a discharging mode (i.e. cooled heat transfer medium enters energy storage device at the cold port 6) the flow of the medium is directed to the first (upper) area of the boundary region 25 downstream of which the temperature profile 58 is located closer to the boundary region 25 than downstream of other areas of the boundary region 25. Thus, the inclined temperature profile 58 can be aligned with the reference temperature profile 57. Therefore, discharging and charging processes will end later compared to an inclined temperature profile since with a vertically oriented profile, the trigger temperature to end the charging or discharging process is reached later. The efficiency of the heat storage device can thus be improved.

As outlined in detail above, the energy storage device provides several advantages. In particular, it provides an increased efficiency as the flow control arrangement can block the flow of the medium, e.g. in an idle mode, and can direct the flow of the medium to specific regions, especially when an inclined temperature profile exists in the heat storage material, e.g. in a charging or in a discharging mode.

The embodiments disclosed herein may thus provide an improved energy storage device.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An energy storage device (2), comprising:
a storage chamber (8), wherein the storage chamber (8) comprises a port (4, 6) configured to pass a heat transfer medium via piping (16) connectable to the port,
a heat storage material (10) disposed in the storage chamber (8) and configured to exchange thermal energy with the heat transfer medium when the heat transfer medium flows through the energy storage device (2) via the port (4, 6), and
a flow control arrangement (20) arranged in a transition area (18) between the port (4, 6) and the heat storage material (10), wherein the flow control arrangement (20) is controllable to adjust a flow of the heat transfer medium through a boundary region (25) between the transition area (18, 19) and the heat storage material (10).

2. The energy storage device according to claim 1, wherein, the flow control arrangement (20) is controllable to take on
a closed state in which the flow of the heat transfer medium past the flow control arrangement (20) is at least partially blocked, and/or
a fully opened state in which the flow control arrangement (20) passes the flow of the heat transfer medium.

3. The energy storage device according to claim 1 or 2, wherein the flow control arrangement (20) comprises at least one flow control element (22, 30-33),
wherein the flow control element (22, 31-32) is rotatably mounted or attached in the transition area and is pivotable to adjust the flow of heat transfer medium, or
wherein the flow control element (30, 33) is slidably mounted in the transition area (18, 19) and is slidable to adjust the flow of heat transfer medium,
wherein preferably, the flow control element is at least one of:
a flap (22, 31, 32) which is rotatably mounted or attached in the transition area;
a plate element (30) being insertable into the transition area;
a foldable or rollable element; or
a pair (33) of perforated plate elements (33a, 33b) slidable against each other to form a ventilation slider.

4. The energy storage device according to any of the preceding claims, wherein the flow control arrangement (20) is controllable to direct at least a part of the flow of the heat transfer medium to different areas (25a, 25b) of the boundary region (25), wherein preferably, the flow control arrangement (20) is controllable to take on
a first state in which a part of the heat transfer medium is directed by the flow control arrangement (20) towards a first area (25a) of the boundary region (25), and
a second state in which a part of the heat transfer medium is directed by the flow control arrangement (20) towards a second area (25b) of the boundary region (25), the first area (25a) being different from the second area (25b).

5. The energy storage device according to any of the preceding claims, wherein the flow control arrangement (20) comprises a plurality of flow control elements (22, 30-33) arranged adjacent to each other such that in a closed state of the flow control arrangement (20), the flow control elements (22, 30-33) form a plane blocking or substantially blocking the flow of the heat transfer medium past the plurality of flow control elements (22, 30-33).

6. The energy storage device according to any of the preceding claims, wherein the flow control arrangement (20) is arranged adjacent to or at the boundary region (25), and/or
the transition area (18, 19) has a longitudinal extension, wherein the flow control arrangement (20) is arranged within a range of less than 30%, 20%, or 10% of the longitudinal extension of the transition area (18, 19) adjacent to the boundary region (25), and/or
wherein the flow control arrangement (20) comprises at least one flow control element (22, 31-32) and wherein each flow control element (22) is rotatable about a rotation axis (28) and has, in a fully opened state, a longitudinal extension perpendicular to the rotation axis (28), wherein the distance between the flow control element (22) in the fully opened state and the boundary region (25) is at most 300%, 200%, or 100% of the longitudinal extension of the flow control element (22, 31-32).

7. The energy storage device according to any of claims 1 to 5, wherein the flow control arrangement (20) is arranged adjacent to or at the port (4, 6), and/or
the transition area (18, 19) has a longitudinal extension, wherein the flow control arrangement (20) is arranged within a range of less than 75%, 50%, 30%, 25%, 20%, or 10% of the longitudinal extension of the transition area (18, 19) adjacent to the port (4, 6), and/or
wherein the flow control arrangement (20) comprises at least one flow control element (22, 31-32) and wherein each flow control element (22) is rotatable about a rotation axis (28) and has, in a fully opened state, a longitudinal extension perpendicular to the rotation axis (28), wherein the distance between the flow control element (22) in the fully opened state and the port (4,6) is at most 300%, 200%, or 100% of the longitudinal extension of the flow control element (22, 31-32).

8. The energy storage device according to any of the preceding claims, wherein the flow control arrangement (20) comprises at least two flow control elements (22, 31-32), wherein the flow control elements (22) are controllable individually and/or as a group by using a control unit (40).

9. The energy storage device according to any of the preceding claims, wherein the energy storage device (2)comprises a control unit (40), wherein the control unit (40) is configured to control the flow control arrangement (20), wherein the control unit (40) is further configured to adjust a temperature profile (58) within the heat storage material (10) by adjusting the flow of heat transfer medium through the boundary region (25) by means of the flow control arrangement (20) .

10. The energy storage device according to claim 9, wherein a plurality of measurement elements (45) are arranged within the storage chamber (8), each measurement element (45) being configured to detect a temperature in the heat storage material (10), and wherein the control unit (40) is configured to determine the temperature profile (57) based on the detected temperatures.

11. The energy storage device according to claim 9 or 10, wherein, when the control unit (40) detects that the temperature profile (58) is inclined with respect to a reference temperature profile (57), the control unit (40) is configured to align the temperature profile (58) with the reference temperature profile (57) by adjusting the flow of the heat transfer medium through the storage chamber (8) with the flow control arrangement (20).

12. The energy storage device according to any of claims 9 to 11, wherein the energy storage device (2) has a longitudinal direction corresponding to the direction of flow of the heat transfer medium through the energy storage device (2),
wherein the flow control arrangement (20) is configured to control the flow of heat transfer medium into the boundary region (25) in either a charging mode or a discharging mode of the energy storage device (2), wherein the control unit (40)is configured to direct, by controlling the flow control arrangement (20), the flow into an area of the boundary region (25) downstream of which, in flow direction, the temperature profile (58) is located closer to the boundary region (25) than downstream of other areas of the boundary region (25) .

13. The energy storage device according to any of the preceding claims, wherein the heat transfer medium is a gaseous medium, in particular air.

14. The energy storage device according to any of the preceding claims, wherein the port (4, 6) is a first port (4) being operated as an inlet for the heat transfer medium in a discharging mode and as an outlet for the heat transfer medium in a charging mode, and wherein the energy storage device (2) comprises a second port (6) being operated as an outlet for the heat transfer medium in the discharging mode and as an inlet for the heat transfer medium in the charging mode.

15. A Method of operating an energy storage device, wherein the energy storage device comprises:
a storage chamber (8), wherein the storage chamber (8) comprises a port (4, 6) configured to pass a heat transfer medium via piping (16) connectable to the port,
a heat storage material (10) disposed in the storage chamber (8) and configured to exchange thermal energy with the heat transfer medium when the heat transfer medium flows through the energy storage device (2) via the port (4, 6), and
a flow control arrangement (20) arranged in a transition area (18) between the port (4, 6) and the heat storage material (10), wherein the flow control arrangement (20) is controllable to adjust a flow of the heat transfer medium through a boundary region (25) between the transition area (18, 19) and the heat storage material (10),
wherein the method comprises:
- adjusting, by controlling the flow control arrangement (20), the flow of the heat transfer medium through the boundary region (25).
